# EUROPÄISCHE PATENTSCHRIFT

(11) **EP 2 123 233 B1**
(45) Veröffentlichungstag und Bekanntmachung des Hinweises auf die Patenterteilung: **21.12.2011**
(21) Anmeldenummer: 08009441.0
(22) Anmeldetag: 23.05.2008
(51) Int. Cl.: A61C 1/14

(54) **Medizinisches, insbesondere dentales, Handstück**
Medical, in particular dental, handpiece
Pièce à main médicale, en particulier dentaire

(43) Veröffentlichungstag der Anmeldung: 25.11.2009
(73) Patentinhaber: W & H Dentalwerk Bürmoos GmbH, 5111 Bürmoos (AT)
(72) Erfinder: Jindra, Thomas, 5111 Bürmoos (AT); Meier, Friedrich-Wilhelm, 32825 Blomberg (DE)
(74) Vertreter: Benda, Ralf

(56) Entgegenhaltungen:
- EP-A- 1 733 696
- WO-A-2006/130989
- DE-A1- 4 103 663
- DE-A1- 19 918 638
- DE-A1-102004 007 413
- US-A- 2 010 210

## Beschreibung

Die vorliegende Erfindung betrifft ein medizinisches, insbesondere dentales, Winkelstück mit einer Werkzeugaufnahme mit zwei formschlüssigen Kupplungselementen zur Drehmomentübertragung und zur axialen Befestigung des Werkzeugs in der Werkzeugaufnahme sowie ein Werkzeug für eine derartige Werkzeugaufnahme.

Ein derartiges Winkelstück ist zum Beispiel aus der Patentanmeldung WO 99/13794 A1 bekannt. Das Kupplungselement zur Drehmomentübertragung umfasst einen Mitnehmer, der an einer Schulter der Hohlwelle,* in der das Werkzeug aufgenommen ist, lagert und der in einen abgeflachten Endabschnitt des Werkzeugs eingreift. Das Kupplungselement zur axialen Fixierung des Werkzeugs in der Werkzeugaufnahme, das somit das ungewollte Lösen des Werkzeugs aus der Werkzeugaufnahme verhindert, umfasst einen Federarm mit einem keilförmigen Fortsatz, der in eine das Werkzeug umlaufende Nut eingreift, die ebenfalls am Ende des Werkzeugs, neben dem abgeflachten Endabschnitt, vorgesehen ist. Zum Lösen des Werkzeugs aus der Werkzeugaufnahme ist ein Druckknopf vorgesehen, der mit dem Federarm zusammenwirkt und ihn radial nach außen verdrängt, so dass der keilförmige Fortsatz des Federarms aus der Nut des Werkzeugs bewegt wird und das Werkzeug aus der Werkzeugaufnahme gezogen werden kann.

Der Nachteil dieser Werkzeugaufnahme ist ihr komplizierter Aufbau, insbesondere der aufwendige Aufbau der Hohlwelle mit dem über das Ende der Hohlwelle hinausragenden Federarm, dessen keilförmigen Fortsatz, dem Mitnehmer und der Schulter für den Mitnehmer. Dieser Aufbau führt zu erhöhten Herstellungs- und Montagekosten.

Die Offenlegungsschrift DE 10 2004 007 413 A1 offenbart ein Handstück mit einer Werkzeugaufnahme mit zwei formschlüssigen Kupplungselementen zur Drehmomentübertragung und zur axialen Sicherung des Werkzeugs. Das Kupplungselement zur Drehmomentübertragung ist an der Werkzeugöffnung der Außenhülse vorgesehen und umfasst eine Zahnkupplung mit einer mehrkantigen Steckfassung. Das Kupplungselement zur axialen Sicherung des Werkzeugs weist in Öffnungen einer Hohlwelle aufgenommene Kugeln und eine die Hohlwelle umgebende und entlang der Hohlwelle verschiebbare Verriegelungshülse auf.

Die Patentanmeldung WO 2006/130989 A1 offenbart ein Handstück mit einer Spannzange mit Spannlaschen, welche das Werkzeug axial in der Werkzeugaufnahme sichern, und einem endseitig an der Werkzeugaufnahme angeordneten, formschlüssigen Kupplungselement zur Drehmomentübertragung.

Der vorliegenden Erfindung liegt daher die Aufgabe zugrunde ein medizinisches, insbesondere dentales, Winkelstück mit einer Werkzeugaufnahme mit einem formschlüssigen Kupplungselement zur Drehmomentübertragung und einem formschlüssigen Kupplungselement zur axialen Befestigung des Werkzeugs in der Werkzeugaufnahme sowie ein Werkzeug für eine derartige Werkzeugaufnahme zu schaffen, die einen einfacheren Aufbau aufweisen und damit einfacher herzustellen sind.

Der Erfindung liegt die Erkenntnis zu Grunde, dass der komplizierte und aufwendige Aufbau der bekannten Werkzeugaufnahme durch ihre Asymmetrie bedingt ist. Basierend auf dieser Erkenntnis weist die Werkzeugaufnahme des medizinischen, insbesondere dentalen, Winkelstücks des Hauptanspruchs eine Werkzeugaufnahme mit einer im Vergleich zu den bekannten Werkzeugaufnahmen erhöhten Symmetrie auf, wodurch der Herstellungsaufwand und die damit verbundenen Kosten gesenkt werden können.

Gemäß der Erfindung weist das medizinische, insbesondere dentale, Winkelstück einen Griffabschnitt, einen an den Griffabschnitt anschließenden Kopfabschnitt, eine rotierbar im Kopfabschnitt angeordnete Werkzeugaufnahme zur lösbaren Aufnahme eines Werkzeugs, eine Werkzeugöffnung, durch die das Werkzeug in die Werkzeugaufnahme einführbar bzw. daraus entfernbar ist, und eine Lösevorrichtung zum Lösen des Werkzeugs aus der Werkzeugaufnahme auf, wobei die Lösevorrichtung an einer der Werkzeugöffnung gegenüberliegenden Seite des Kopfabschnitts angeordnet ist. Die Längsachse der Werkzeugaufnahme und die Längsachse des Griffabschnitts sind gewinkelt zueinander angeordnet, so dass ein in der Werkzeugaufnahme aufgenommenes Werkzeug quer zur Längsachse des Griffabschnitts aus der Werkzeugöffnung ragt. Die Werkzeuglösevorrichtung wirkt zum Lösen des Werkzeugs aus der Werkzeugaufnahme mit der Werkzeugaufnahme zusammen.

Die Werkzeugaufnahme umfasst eine Hohlwelle, die sich von der Werkzeugöffnung in Richtung der Werkzeuglösevorrichtung erstreckt, wobei an jenem Ende der Hohlwelle, das näher zur Werkzeuglösevorrichtung angeordnet ist, ein erstes formschlüssiges Kupplungselement zur Drehmomentübertragung auf das Werkzeug vorgesehen ist, das einen an der Innenseite der Hohlwelle angeordneten polygonalen Wandabschnitt umfasst, und an diesem der Werkzeuglösevorrichtung näheren Ende der Hohlwelle des Weiteren ein zweites formschlüssiges Kupplungselement zur axialen Befestigung des Werkzeugs in der Hohlwelle vorgesehen ist, das zumindest eine die Hohlwelle durchsetzende Bohrung und zumindest ein durch die Bohrung in die Hohlwelle ragendes Formelement aufweiset, zum Eingriff des Formelements in eine am Werkzeug vorgesehene Aufnahme. Eine Triebwelle umgibt die Hohlwelle und eine beweglich im Winkelstück aufgenommene Verriegelungshülse mit einer Aufnahme für das Formelement.

Die Werkzeugaufnahme umfasst somit eine im Wesentlichen symmetrisch geformte, im Wesentlichen zylindrische Hohlwelle, die an einem Ende einen polygonalen, bevorzugt symmetrischen, insbesondere hexagonalen, Wandabschnitt und eine oder mehrere, bevorzugt in gleichen Abständen voneinander entfernte und somit symmetrisch angeordnete, Bohrungen aufweist. Diese Hohlwelle ist aufgrund ihrer Symmetrie im Vergleich zu den bekannten Hohlwellen, zum Beispiel zu der oben beschriebenen Hohlwelle aus der Patentanmeldung WO 99/13794 A1 mit dem über das Ende der Hohlwelle hinausragenden Federarm, dem keilförmigen Fortsatz, dem Mitnehmer und der Schulter für den Mitnehmer, merklich einfacher aufgebaut und dem gemäß einfacher und günstiger herstellbar.

Gemäß einem Ausführungsbeispiel ist der Innendurchmesser der Hohlwelle im Wesentlichen über ihre gesamte Länge gleich, wodurch die Herstellung der Hohlwelle weiter vereinfacht ist. Bevorzugt beträgt der Innendurchmesser der Hohlwelle, insbesondere in jenem Abschnitt der Hohlwelle, an dem kein formschlüssiges Kupplungselement vorgesehen ist, und der Außendurchmesser des Werkzeugschafts jeweils in etwa 1,5 - 2,5 mm, bevorzugt in etwa 1,6 - 2,35 mm, insbesondere 1,6 mm, 2,0 mm oder 2,35 mm.

Durch die Anordnung der beiden Kupplungselemente, bezogen auf die Längsachse der Werkzeugaufnahme, axial hintereinander, insbesondere unmittelbar hintereinander, wird in vorteilhafter Weise eine besonders zuverlässige Fixierung des Werkzeugs in der Werkzeugaufnahme erreicht. Dem gemäß sind die beiden Kupplungselemente des Werkzeugs, bezogen auf seine Längsachse, axial hintereinander, insbesondere unmittelbar hintereinander, angeordnet.

Durch die Anordnung des ersten Kupplungselements mit dem polygonalen Wandabschnitt weiter entfernt von der Werkzeugöffnung oder näher zur Werkzeuglösevorrichtung, insbesondere zum Druckdeckel, als das zweite Kupplungselement, wird eine Verringerung der Bauhöhe des Kopfabschnitts der Winkelstücks erreicht, da das erste Kupplungselement unmittelbar am Ende der Hohlwelle vorgesehen sein kann. Dem gemäß sind die beiden Kupplungselemente des Werkzeugs unmittelbar an dem dem Arbeitsteil gegenüberliegenden Ende des Werkzeugs angeordnet, wobei insbesondere das erste, polygonale Kupplungselement zur Drehmomentübertragung weiter vom Arbeitsteil entfernt ist als das zweite Kupplungselement mit der Aufnahme für das Formelement der Werkzeugaufnahme.

Gemäß einem Ausführungsbeispiel ist die beweglich im Winkelstück aufgenommene Verriegelungshülse mit einer Aufnahme für das Formelement durch einen Druckknopf oder Drucktaster bedienbar. Die Verriegelungshülse bewirkt in ihrer Grundstellung, in der sie durch ein Federelement gehalten wird, die axiale Befestigung des Werkzeugs in der Werkzeugaufnahme, in dem sie das Formelement durch die Bohrung der Hohlwelle in die Aufnahme des Werkzeugs zwingt. Durch die Betätigung des Druckknopfs wird die Verriegelungshülse entgegen der Federkraft des Federelements aus ihrer Grundstellung bewegt, so dass das Formelement die Aufnahme des Werkzeugs verlassen und in die Aufnahme der Verriegelungshülse eingreifen kann, wodurch das Werkzeug aus der Werkzeugaufnahme entnommen werden kann.

Gemäß einem weiteren Ausführungsbeispiel ist an der Triebwelle zumindest eine Lagerstelle für ein die Hohlwelle rotierbar lagerndes Wälzlager und / oder eine Lagerstelle für das die Verriegelungshülse vorspannende Federelement vorgesehen. Bevorzugt ist an der Triebwelle des Weiteren ein Zahnrad oder Ritzel befestigt, das mit einem Zahnrad einer im Griffabschnitts des Winkelstücks drehbar gelagerten Antriebswelle kämmt, so dass die von einer Antriebseinheit, insbesondere einem Elektromotor oder Luftmotor, erzeugte Antriebsbewegung auf die Werkzeugaufnahme und das darin befestigte Werkzeug übertragen wird.

Gemäß einem besonders bevorzugten Ausführungsbeispiel sind zusätzlich zu der Hohlwelle auch die Verriegelungshülse und / oder die Triebwelle und / oder der Druckdeckel der Werkzeuglösevorrichtung im Wesentlichen symmetrisch geformt, womit eine weitere Vereinfachung der Herstellung dieser Bauteile und damit des gesamten Winkelstücks erreicht wird.

Gemäß einem anderen Ausführungsbeispiel besteht die Hohlwelle aus zwei Teilen, wobei beide Kupplungselemente an einem der beiden Teile vorgesehen sind. Diese Maßnahme erleichtert das Formen der beiden Kupplungselemente an der Hohlwelle.

Gemäß einem Ausführungsbeispiel weist des Winkelstück ein medizinisches, insbesondere dentales, Werkzeug, das zur lösbaren Aufnahme in der beschriebenen Werkzeugaufnahme geeignet ist, auf. Das Werkzeug umfasst einen Werkzeugschaft mit einem Arbeitsteil und einem Kupplungsabschnitt, wobei der Kupplungsabschnitt ein erstes, polygonales Kupplungselement zur Drehmomentübertragung auf das Werkzeug und ein zweites Kupplungselement mit einer Aufnahme, insbesondere einer den Werkzeugschaft umlaufenden Ringnut, für ein Formelement der Werkzeugaufnahme umfasst. Das Werkzeug ist bevorzugt als in Rotation versetzbarer Bohrer mit einer oder mehreren Schneidkanten oder einem oder mehreren abrasiven Abschnitten oder Flächen ausgebildet. Es kann jedoch auch andere Formen aufweisen, zum Beispiel eine in eine Hubbewegung versetzbare Feile oder ein Sägeblatt. Dem gemäß umfasst der Antrieb für derartige Werkzeuge einen Bewegungswandler im Winkelstück, zum Beispiel ein Exzentergetriebe, das die Rotationsbewegung an der Triebwelle bzw. zwischen der Triebwelle und der im Griffabschnitt des Winkelstücks drehbar gelagerten Antriebswelle in eine Hubbewegung umwandelt.

Die Erfindung wird nachfolgend anhand eines bevorzugten Ausführungsbeispiels und Bezug nehmend auf die beigefügte Zeichnung erläutert:

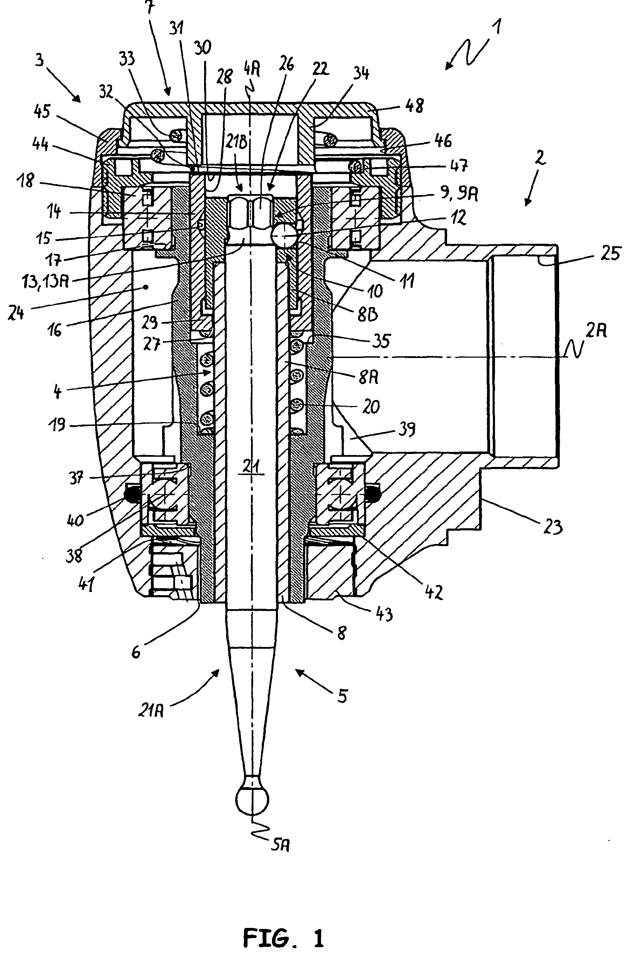

Figur 1 zeigt ein dentales Winkelstück mit einer eine Hohlwelle umfassenden Werkzeugaufnahme, einer Verriegelungshülse, einer Triebwelle und einem Druckknopf, wobei alle diese Bauteile im Wesentlichen symmetrisch geformt sind.

Das in Figur 1 abgebildete Winkelstück 1 weist einen Griffabschnitt 2 und einen Kopfabschnitt 3 auf, die von einer ein- oder mehrteilig ausgebildeten Außenhülse 23 umgeben sind. Der Griffabschnitt 2 besteht aus einem länglichen, rohrförmigen, hohlen Hülsenteil mit einem Innenraum 25 und umfasst an einem Ende eine Anschlussvorrichtung zur Verbindung mit einer Antriebseinheit, zum Beispiel mit einem Elektromotor oder mit einem Luftmotor, und / oder zur Verbindung mit zumindest einer Medienquelle. Die zumindest eine Medienquelle umfasst zum Beispiel eine Druckgasquelle, insbesondere eine Druckluftquelle, oder eine Flüssigkeitsquelle, insbesondere eine Wasserquelle, zur Versorgung des Winkelstücks 1 mit Druckgas oder Flüssigkeit, zum Beispiel zur Verwendung als Kühlmedium oder zum Antrieb einer mit einem Behandlungswerkzeug 5 verbindbaren, fluidbetriebenen Antriebseinheit im Winkelstück 1, zum Beispiel eines Druckluft betriebenen Laufrads. Die Medienquelle kann auch eine Stromquelle umfassen, zur Versorgung eines elektrischen Verbrauchers im Winkelstück 1, zum Beispiel einer Beleuchtungsvorrichtung, einer Steuervorrichtung oder eines elektrischen Motors zum Antrieb eines mit dem Winkelstück 1 verbindbaren Behandlungswerkzeugs 5.

Bevorzugt ist der Griffabschnitt 2 gebogen ausgebildet oder umfasst zwei gewinkelt zueinander angeordnete oder durch eine Biegung miteinander verbundene Teile, woraus eine für den Anwender ergonomisch vorteilhaftere Handhabung des Winkelstücks 1 resultiert.

An dem der Anschlussvorrichtung gegenüber liegenden Ende des Griffabschnitts 2 schließt der Kopfabschnitt 3 an den Griffabschnitt 2 an. Der Kopfabschnitt 3 weist eine Kammer 24 auf, die mit dem Innenraum 25 des Griffabschnitts 2 verbunden ist, so dass zwischen dem Kopfabschnitt 3 und dem Griffabschnitt 2 eine ein- oder bidirektionale Übertragung von Medien, Antriebsenergie oder Antriebsbewegung möglich ist.

In der Außenhülse des Kopfabschnitts 3 ist eine Werkzeugöffnung 6 vorgesehen, durch die das Werkzeug 5, zum Beispiel ein in Rotation versetzbarer Bohrer, in den Kopfabschnitt 3 des Winkelstücks 1 einführbar bzw. daraus entfernbar ist. Die Werkzeugöffnung 6 ist mit der Kammer 24 des Kopfabschnitts 3 bzw. mit darin aufgenommenen Bauteilen, insbesondere mit der Werkzeugaufnahme 4, verbunden. Die Werkzeugaufnahme 4 erstreckt sich durch die Kammer 24 in etwa bis zur Werkzeugöffnung 6 oder durchsetzt diese geringfügig.

Die Längsachse 4A der Werkzeugaufnahme 4 und die Längsachse 2A des Griffabschnitts 2 sind gewinkelt zueinander angeordnet, bevorzugt in etwa 90° - 94°, so dass die Werkzeugöffnung 6 seitlich am Kopfabschnitt 3 angeordnet ist. Ein in der Werkzeugaufnahme 4 aufgenommenes Werkzeug 5 ragt somit in Bezug auf den Griffabschnitt 2 bzw. dessen Längsachse 2A seitlich durch die Werkzeugöffnung 6. An einer der Werkzeugöffnung 6 gegenüberliegenden Seite des Kopfabschnitts 3 ist ein mit der Werkzeugaufnahme 4 zusammenwirkenden Werkzeuglösevorrichtung 7 zum Lösen des Werkzeugs 5 aus der Werkzeugaufnahme 4 vorgesehen. Die Werkzeuglösevorrichtung 7 umfasst bevorzugt einen Drucktaster, Druckdeckel oder Druckknopf 48. Die Werkzeuglösevorrichtung 7 kann jedoch auch anders ausgestaltet sein oder andere Bauteile umfassen, zum Beispiel eine Öffnung in der Außenhülse 23 des Winkelstücks 1, durch die ein Bohrerausstoßer in die Kammer 24 und in die Werkzeugaufnahme 4 einführbar ist.

Die Werkzeugaufnahme 4 umfasst eine Hohlwelle 8, in deren größtenteils zylindrischen Innenbohrung der Werkzeugschaft 21 des Werkzeugs 5 einführbar ist. Der Außenmantel der Hohlwelle 8 ist zylindrisch geformt. Die Hohlwelle 8 besteht gemäß Figur 1 aus zwei Bauteilen 8A, 8B, die, bevorzugt unlösbar, miteinander verbunden sind. Es ist jedoch selbstverständlich auch möglich, dass die Hohlwelle 8 einstückig ausgebildet ist. Der Innendurchmesser der Hohlwelle 8 ist im Wesentlichen über ihre gesamte Länge gleich, insbesondere ist der Innendurchmesser im Abschnitt mit einer zylindrischen Innenwand im Wesentlichen konstant oder ist der Innendurchmesser jenes Abschnitts 8A der Hohlwelle 8, der kein Kupplungselement aufweist, im Wesentlichen konstant.

An der Innenseite der Hohlwelle 8 ist ein erstes formschlüssiges Kupplungselement 9 zur Drehmomentübertragung auf das Werkzeug 5 vorgesehen, das einen polygonalen Wandabschnitt 9A umfasst. Das Kupplungselement 9 ist bevorzugt am lösevorrichtungs-seitigen Ende der Hohlwelle 8 angeordnet, insbesondere direkt an dem dem Druckknopf 48 der Werkzeuglösevorrichtung 7 zugewandten Ende der Hohlwelle 8. Der polygonale Wandabschnitt 9A umfasst zum Beispiel zwischen drei und acht Flächenabschnitte, die mit entsprechenden Flächenabschnitten 26 am Kupplungselement 22 des Werkzeugs 5 zusammenwirken bzw. diese kontaktieren, um das Drehmoment auf das Werkzeug 5 zu übertragen. Das erste Kupplungselement 9 der Hohlwelle 8 und das erste Kupplungselement 22 des Werkzeugs 5 weisen bevorzugt jeweils sechs in etwa gleich große, regelmäßig angeordnete Flächenabschnitte auf und sind somit bevorzugt als symmetrischer Hexagon ausgebildet.

An das erste Kupplungselement 9 anschließend, bevorzugt unmittelbar daran angrenzend und axial hintereinander angeordnet, ist ein zweites formschlüssiges Kupplungselement 10 zur axialen Befestigung des Werkzeugs 5 in der Hohlwelle 8 und dem Winkelstück 1 vorgesehen. Das zweite Kupplungselement 10 ist ebenfalls bevorzugt am lösevorrichtungs-seitigen Ende der Hohlwelle 8 angeordnet. Es umfasst zumindest eine die Hohlwelle 8 durchsetzende Bohrung 11 und zumindest ein durch die Bohrung 11 in die Hohlwelle 8 ragendes Formelement 12. Das Formelement 12 ist zum Beispiel als Kugel, zylindrischer Körper oder Ellipsoid ausgebildet. Das Formelement 12 greift in ein am Werkzeug 5 vorgesehenes Kupplungselement 13 ein, das eine Aufnahme 13A für das Formelement 12 umfasst, zum Beispiel eine Nut, insbesondere eine den Werkzeugschaft 21 umlaufende Ringnut, einen Einstich oder einen Rücksprung. Der Durchmesser der Bohrung 11 ist an ihrer der Innenbohrung der Hohlwelle 8 zugewandten Seite bevorzugt geringer als auf der der Hohlwelle 8 abgewandten Seite, so dass das Formelement 12 sicher in der Bohrung 11 gehalten wird.

Gemäß dem Ausführungsbeispiel nach Figur 1 sind beide Kupplungselemente 9, 10 am Teil 8B der Hohlwelle 8 vorgesehen. Der Hohlwellenteil 8B umfasst einen ersten Abschnitt mit einem dickeren Wanddurchmesser, an dem die Bohrung 11 vorgesehen ist, und einen daran anschließenden zweiten Abschnitt mit einem dünneren Wanddurchmesser, der als buchsenförmiger Anschluss oder Aufnahme für den Hohlwellenteil 8A dient. Der Hohlwellenteil 8B ist an seiner Außenseite zylindrisch geformt. Die Innenwand des Hohlwellenteils 8B, die durch die den Hohlwellenteil 8B durchsetzende Bohrung gebildet ist, ist, bis auf den polygonalen Wandabschnitt 9A des ersten Kupplungselements 9, ebenfalls zylindrisch geformt. Auch die Innenwand des Hohlwellenteils 8A ist zylindrisch geformt. Die Hohlwelle 8 ist somit im Wesentlichen symmetrisch ausgebildet.

Eine zylindrische Verriegelungshülse 14 umgibt die Hohlwelle 8 konzentrisch. Durch eine erste, der Werkzeugöffnung 6 zugewandte Öffnung 27 ragt die Hohlwelle 8, insbesondere deren zweites Kupplungselement 10, in das Innere der Verriegelungshülse 14. Der Durchmesser der Öffnung 27 ist geringer als der Innendurchmesser der Verriegelungshülse 14, so dass die Öffnung 27 von einem Ringbund 29 umgeben ist, der als Lagerstelle für ein Federelement 20 dient, zum Beispiel für eine Spiralfeder. Das Federelement 20 spannt die Verriegelungshülse 14 in Richtung des Druckdeckels 48 vor. Die Verriegelungshülse 14 ist entgegen der Federkraft des Federelements 20 bewegbar.

An der Innenwand 28 der Verriegelungshülse 14 ist eine Aufnahme 15 für das Formelement 12 vorgesehen, zum Beispiel ein ringförmiger Einstich oder eine Ringnut. Im Bereich der Aufnahme 15 ist der Innendurchmesser der Verriegelungshülse 14 somit größer als in daran angrenzenden Abschnitten der Innenwand 28. Die Aufnahme 15 ist in der Ausgangsstellung der Verriegelungshülse 14, so wie in Figur 1 dargestellt, so angeordnet, dass das Formelement 12 nicht in der Aufnahme 15 aufgenommen ist, sondern dass es durch die Innenwand 28 der Verriegelungshülse 14 in die Bohrung 11 der Hohlwelle 8 und die Aufnahme 13A des Werkzeugs 5 gedrückt wird, wodurch das Werkzeug 5 fixiert ist. Wird die Verriegelungshülse 14 entgegen der Federkraft des Federelements 20 in Richtung der Werkzeugöffnung 6 verschoben bis die Aufnahme 15 über der Bohrung 11 zu liegen kommt, dann kann das Formelement 12 in die Aufnahme 15 ausweichen, wobei es sich aus der Aufnahme 13A des Werkzeugs 5 löst, so dass das Werkzeug 5 aus der Werkzeugaufnahme 4 entfernt werden kann.

Das dem Druckknopf 48 zugewandte Ende der Verriegelungshülse 14 weist eine weitere Öffnung 30 sowie ein Kontaktelement 31 auf, das dem Druckknopf 48 zugewandt ist. Das Kontaktelement 31, zum Beispiel eine Kontaktfläche, ist vom Druckknopf 48 durch einen Spalt 32 getrennt. Der Drucktaster oder Druckknopf 48 ist durch ein Federelement 33 vorgespannt und kann entgegen der Federkraft des Federelements 33 in Richtung der Verriegelungshülse 14 verschoben werden, bis er, insbesondere ein an der Innenseite des Druckknopfs 48 angeordnetes, in die Kammer 24 ragendes Betätigungsglied 34, die Kontaktfläche 31 berührt und die Verriegelungshülse 14 wie bereits beschrieben in Richtung der Werkzeugöffnung 6 verschiebt, bis sich die Aufnahme 15 der Verriegelungshülse 14 über der Bohrung 11 der Hohlwelle 8 befindet. Das Betätigungsglied 34 kann zum Beispiel als ringförmige Wand ausgebildet sein oder mehrere Fortsätze aufweisen.

Eine Triebwelle 16 umgibt zumindest teilweise die Hohlwelle 8 und die Verriegelungshülse 14. Die Triebwelle 16 erstreckt sich von der Werkzeugöffnung 6 durch die Kammer 24 des Kopfabschnitts 3 in Richtung der Werkzeuglösevorrichtung 7 oder des Druckknopfs 48. Sie ist als Hohlwelle ausgebildet, die drei Abschnitte mit unterschiedlichen Durchmessern aufweist. In dem ersten Abschnitt mit dem engsten Durchmesser ist die Triebwelle 16 ausschließlich von der Hohlwelle 8 durchsetzt, wobei die beiden Wellen 8, 16 in diesem Bereich fest miteinander verbunden sind, zum Beispiel miteinander verpresst oder verschweißt. Im Mittelabschnitt der Triebwelle 16 ist neben der Hohlwelle 8 auch das Federelement 20 aufgenommen, das die Verriegelungshülse 14 vorspannt. Eine Ringschulter am Übergang zwischen dem ersten Abschnitt und dem Mittelabschnitt dient als Lagerstelle 19 für das Federelement 20.

Im dritten Abschnitt der Triebwelle 16, der den größten Innendurchmesser aufweist, ist zusätzlich zur Hohlwelle 8 und dem Federelement 20 auch noch die Verriegelungshülse 14 verschiebbar angeordnet. Die am Übergang zwischen dem Mittelabschnitt und dem dritten Abschnitt der Triebwelle 16 ausgebildete Ringschulter dient als Anschlag 35 zur Bewegungsbegrenzung der Verriegelungshülse 14.

An der äußeren Mantelfläche der Triebwelle 16 sind zwei Lagerstellen 17, 37 für zwei Lager, insbesondere Wälzlager 18, 38, vorgesehen. Die Lagerstellen 17, 37 sind zum Beispiel als ringförmige Flansche oder als Ringschultern ausgebildet, an denen jeweils der innere Laufring der Wälzlager 18, 38 anliegt.

Die Triebwelle 16 dient auch zur Befestigung eines Zahnrads oder Ritzels 39. Gemäß dem in Figur 1 dargestellten Ausführungsbeispiel ist das Winkelstück 1 über seine Anschlussvorrichtung mit einer Antriebseinheit lösbar verbindbar, wobei zur Übertragung der von der Antriebseinheit erzeugten Antriebsbewegung, insbesondere einer Rotationsbewegung, und des Drehmoments auf das mit dem Winkelstück 1 verbindbaren Werkzeug 5 der Griffabschnitt 2 von zumindest einer drehbar gelagerten Antriebswelle durchsetzt ist, auf der ein Zahnrad sitzt, das mit dem Ritzel 39 kämmt.

Selbstverständlich ist es auch möglich das Winkelstück 1 als druckluftbetriebenes Winkelstück auszubilden, wobei dann anstelle des Ritzels 39 ein Laufrad auf der Triebwelle 16 befestigt ist. Das Laufrad wird über eine Fluidleitung mit einem Antriebsfluid, insbesondere Druckluft, beaufschlagt und in Bewegung versetzt.

Wie aus der Figur 1 erkennbar ist, sind neben der Hohlwelle 8 auch die Verriegelungshülse 14, die Triebwelle 16 und der Druckknopf 48 im Wesentlichen symmetrisch geformt. Auch sind alle diese Bauteile konzentrisch an der Längsachse 4A angeordnet.

Das Wälzlager 38 ist durch einen O-Ring 40 und durch eine Federscheibe 41 mit einem geringen Bewegungsspiel im Winkelstück 1 gelagert. Eine Dichtscheibe 42 verhindert das Eindringen von Verschmutzungen in den Kopfabschnitt 3 und stützt das Wälzlager 38. Unterhalb der Federscheibe 41 ist eine Sprayplatte 43 zur Vermischung von Wasser und Druckluft und zur Abgabe des Wasser-Luft-Gemisches über eine oder mehrere Düsen vorgesehen.

Das Wälzlager 18 ist an einer Schulter der Außenhülse 23 des Kopfabschnitts 3 und in einer Lagerbuchse 44 gelagert. Die Lagerbuchse 44 ist über ein erstes Gewinde mit der Außenhülse 23 und über ein zweites Gewinde mit einer Druckdeckelhülse 45 verbunden. An der Innenseite der Druckdeckelhülse 45 ist eine Gleitfläche 46 vorgesehen, entlang der der Druckknopf 48 verschiebbar ist und an der er geführt wird. Die Lagerbuchse 44 umfasst auch eine Lagerstelle 47 für das Federelement 33, das den Druckknopf 48 vorspannt.

Das in die Werkzeugaufnahme 4 lösbar einschiebbare Werkzeug 5 umfasst einen sich entlang der Längsachse 5A erstreckenden Werkzeugschaft 21 mit einem Arbeitsteil 21A mit einem abrasiven Abschnitt zum Bearbeiten und Abtragen von menschlichem oder tierischen Gewebe oder von Ersatzstoffen und einem Kupplungsabschnitt 21 B. Am Kupplungsabschnitt 21B sind das erste, polygonale Kupplungselement 22 mit den Flächenabschnitten 26 zur Drehmomentübertragung auf das Werkzeug 5 und das zweite Kupplungselement 13 mit einer Aufnahme 13A, insbesondere einer den Werkzeugschaft 21 umlaufenden Ringnut, für das Formelement 12 der Werkzeugaufnahme 4 angeordnet.

Wie aus Figur 1 ersichtlich ist, sind das erste und zweite Kupplungselement 13, 22, bezogen auf die Längsachse 5A des Werkzeugs 5, axial hintereinander, insbesondere unmittelbar hintereinander, angeordnet. Des Weiteren befinden sich das erste und zweite Kupplungselement 13, 22 unmittelbar an dem dem Arbeitsteil 21A gegenüberliegenden Ende des Werkzeugs 5. Der Werkzeugschaft 21 ist zumindest in jenem Bereich, der in die Hohlwelle 8 eingeschoben wird, zylindrisch geformt, mit Ausnahme der beiden Kupplungselemente 13, 22.

Die Erfindung ist nicht auf das beschriebene Ausführungsbeispiel beschränkt, sondern umfasst alle Ausführungen, die das prinzipielle, sinngemäße Funktionsprinzip der Erfindung anwenden oder beinhalten. Selbstverständlich ist es auch möglich, die Werkzeugaufnahme mit den beiden formschlüssigen Kupplungselementen auch in anderen medizinischen Handgriffen zu verwenden, zum Beispiel in chirurgischen Handgriffen, die eine pistolenförmige Gestalt aufweisen, oder in länglichen, geraden Handgriffen, die zum Lösen des Werkzeugs zum Beispiel einen Hebel, einen Schieber oder zwei gegeneinander verdrehbare Handgriffteile umfassen. Neben der im Wesentlichen symmetrischen Werkzeugaufnahme können diese Handgriffe auch zumindest ein zusätzliches, im Wesentlichen symmetrisches Bauteil, das die Werkzeugaufnahme umgibt, zum Beispiel eine Verriegelungshülse, eine Triebwelle oder ein Teil der Werkzeuglösevorrichtung, aufweisen.

## Patentansprüche

1. Medizinisches, insbesondere dentales, Winkelstück (1) mit einem Griffabschnitt (2), einem an den Griffabschnitt (2) anschließenden Kopfabschnitt (3), einer rotierbar im Kopfabschnitt (3) angeordneten Werkzeugaufnahme (4) zur lösbaren Aufnahme eines Werkzeugs (5), wobei die Längsachse (4A) der Werkzeugaufnahme (4) und die Längsachse (2A) des Griffabschnitts (2) gewinkelt zueinander angeordnet sind, so dass ein in der Werkzeugaufnahme (4) aufgenommenes Werkzeug (5) quer zur Längsachse (2A) des Griffabschnitts (2) aus einer Werkzeugöffnung (6) des Kopfabschnitts (3) ragt, und eine mit der Werkzeugaufnahme (4) zusammenwirkenden Lösevorrichtung (7) zum Lösen des Werkzeugs (5) aus der Werkzeugaufnahme (4), wobei die Lösevorrichtung (7) an einer der Werkzeugöffnung (6) gegenüberliegenden Seite des Kopfabschnitts (3) angeordnet ist, wobei die Werkzeugaufnahme (4) eine Hohlwelle (8) aufweist, die sich von der Werkzeugöffnung (6) in Richtung der Werkzeuglösevorrichtung (7) erstreckt, wobei ein erstes formschlüssiges Kupplungselement (9) zur Drehmomentübertragung auf das Werkzeug (5) vorgesehen ist, das einen an der Innenseite der Hohlwelle (8) angeordneten polygonalen Wandabschnitt (9A) umfasst, und wobei an jenem Ende der Hohlwelle (8), das näher zur Werkzeuglösevorrichtung (7) angeordnet ist, ein zweites formschlüssiges Kupplungselement (10) zur axialen Befestigung des Werkzeugs (5) in der Hohlwelle (8) vorgesehen ist, das zumindest eine die Hohlwelle (8) durchsetzende Bohrung (11) und zumindest ein durch die Bohrung (11) in die Hohlwelle (8) ragendes Formelement (12) umfasst, zum Eingriff des Formelements (12) in ein am Werkzeug (5) vorgesehenes Kupplungselement (13), **dadurch gekennzeichnet, dass**
das erste formschlüssige Kupplungselement (9) an dem der Werkzeuglösevorrichtung (7) näheren Ende der Hohlwelle (8) vorgesehen ist und dass eine Triebwelle (16) vorgesehen ist, welche die Hohlwelle (8) und eine beweglich im Winkelstück (1) aufgenommene Verriegelungshülse (14) mit einer Aufnahme (15) für das Formelement (12) umgibt.

2. Winkelstück (1) nach Anspruch 1, **dadurch gekennzeichnet, dass** der Innendurchmesser der Hohlwelle (8) im Wesentlichen über ihre gesamte Länge gleich ist.

3. Winkelstück (1) nach Anspruch 1 oder 2, **dadurch gekennzeichnet, dass** das erste und zweite Kupplungselement (9, 10), bezogen auf die Längsachse (4A) der Werkzeugaufnahme (4), axial hintereinander, insbesondere unmittelbar hintereinander, angeordnet sind.

4. Winkelstück (1) nach einem der vorhergehenden Ansprüche, **dadurch gekennzeichnet, dass**
das erste Kupplungselement (9) mit dem polygonalen Wandabschnitt (9A) weiter von der Werkzeugöffnung (6) entfernt ist als das zweite Kupplungselement (10).

5. Winkelstück (1) nach einem der vorhergehenden Ansprüche, **gekennzeichnet durch** ein Federelement (20), das die Verriegelungshülse (14) in Richtung eines Druckdeckels (48) der Werkzeuglösevorrichtung (7) vorspannt.

6. Winkelstück (1) nach einem der vorhergehenden Ansprüche, **gekennzeichnet durch** eine Ringschulter an der Triebwelle (16), die als Anschlag (35) zur Bewegungsbegrenzung der Verriegelungshülse (14) dient.

7. Winkelstück (1) nach einem der vorhergehenden Ansprüche, **dadurch gekennzeichnet, dass**
die Triebwelle (16) zumindest eine Lagerstelle (17, 37) für ein die Hohlwelle (8) rotierbar lagerndes Wälzlager (18, 38) und / oder eine Lagerstelle (19) für ein die Verriegelungshülse (14) vorspannendes Federelement (20) aufweist.

8. Winkelstück (1) nach einem der vorhergehenden Ansprüche, **dadurch gekennzeichnet, dass**
die Hohlwelle (8) und / oder die Verriegelungshülse (14) und / oder die Triebwelle (16) und / oder der Druckdeckel (48) der Werkzeuglösevorrichtung (7) im Wesentlichen symmetrisch geformt ist / sind.

9. Winkelstück (1) nach einem der vorhergehenden Ansprüche, **dadurch gekennzeichnet, dass**
die Hohlwelle (8) zwei Teile (8A, 8B) umfasst, wobei das erste und zweite Kupplungselement (9, 10) an einem der beiden Teile (8A, 8B) vorgesehen sind.

10. Winkelstück (1) nach einem der vorhergehenden Ansprüche, **dadurch gekennzeichnet, dass**
der Innendurchmesser der Hohlwelle (8) in etwa 1,5 - 2,5 mm beträgt.

11. Winkelstück (1) nach einem der vorhergehenden Ansprüche, **gekennzeichnet durch**, ein medizinisches, insbesondere dentales, Werkzeug (5) zur lösbaren Aufnahme in der Werkzeugaufnahme (4) des Winkelstücks (1), umfassend einen Werkzeugschaft (21) mit einem Arbeitsteil (21A) und einem Kupplungsabschnitt (21 B), wobei der Kupplungsabschnitt (21B) ein erstes, polygonales Kupplungselement (22) zur Drehmomentübertragung auf das Werkzeug (5) und ein zweites Kupplungselement (13) mit einer Aufnahme (13A), insbesondere einer den Werkzeugschaft (21) umlaufenden Ringnut, für ein Formelement (12) der Werkzeugaufnahme (4) umfasst.

12. Winkelstück (1) nach Anspruch 11, **dadurch gekennzeichnet, dass**
das erste und zweite Kupplungselement (13, 22) des medizinischen Werkzeugs (5) bezogen auf die Längsachse (5A) des Werkzeugs (5), axial hintereinander, insbesondere unmittelbar hintereinander, angeordnet sind.

13. Winkelstück (1) nach Anspruch 11 oder 12, **dadurch gekennzeichnet, dass** das erste und zweite Kupplungselement (13, 22) des medizinischen Werkzeugs (5) unmittelbar an dem dem Arbeitsteil (21 A) gegenüberliegenden Ende des Werkzeugs (5) angeordnet sind.

## Claims

1. A medical, in particular dental angle piece (1), having a handle section (2), a head section (3) connected to the handle section, a tool receptacle (4) arranged rotatably in the head section (3) for detachably holding a tool (5), wherein the longitudinal axis (4A) of the tool receptacle (4) and the longitudinal axis (2A) of the handle section (2) are arranged at an angle to one another, so that a tool (5) accommodated in the tool receptacle (4) protrudes out of a tool opening (6) of the head section (3) transversely to the longitudinal axis (2A) of the handle section (2), and a releasing device (7), which cooperates with the tool receptacle (4) to release the tool (5) from the tool receptacle (4), such that the releasing device (7) is arranged on a side of the head section (3) which is opposite the tool opening (6), wherein the tool receptacle (4) has a hollow shaft (8) which extends from the tool opening (6) in the direction of the tool-releasing device (7), wherein a first form-fitting coupling element (9) is provided for transmitting the torque to the tool (5), comprising a polygonal wall section (9A) arranged on the inside of the hollow shaft (8), and wherein a second form-fitting coupling element (10) is provided on the end of the hollow shaft (8) that is arranged closer to the tool-releasing device (7) for axial fastening of the tool (5) in the hollow shaft (8), comprising at least one borehole (11) which passes through the hollow shaft (8) and at least one form element (12) protruding through the borehole (11) into the hollow shaft (8), for engaging the form element (12) in a coupling element (13) provided on the tool (5), **characterized in that**
the first form-fitting coupling element (9) is provided on the end of the hollow shaft (8) closer to the tool-releasing device (7), and **in that** a drive shaft (16) is provided, which surrounds the hollow shaft (8) and a locking sleeve (14) which is held movably in the angle piece (1) with a receptacle (15) for the form element (12).

2. The angle piece (1) according to Claim 1, **characterized in that** the inside diameter of the hollow shaft (8) is essentially the same over its entire length.

3. The angle piece (1) according to Claim 1 or 2, **characterized in that** the first and second coupling elements (9, 10) are arranged axially one after the other, based on the longitudinal axis (4A) of the toot receptacle (4), in particular being arranged directly one after the other.

4. The angle piece (1) according to any one of the preceding claims, **characterized in that**
the first coupling element (9) with the polygonal wall section (9A) is a greater distance away from the tool opening (6) than is the second coupling element (10).

5. The angle piece (1) according to any one of the preceding claims, **characterized by** a spring element (20) which prestresses the locking sleeve (14) in the direction of a pressure cover (48) of the tool release device (7).

6. The angle piece (1) according to any one of the preceding claims, **characterized by** an annular shoulder on the driveshaft (16), which serves as a stop (35) for limiting the movement of the locking sleeve (14).

7. The angle piece (1) according to any one of the preceding claims, **characterized in that**
the driveshaft (16) has at least one bearing contact (17, 37) for a roller bearing (18, 38), which rotatably supports the hollow shaft (8) and/or a bearing contact (19) for a spring element (20), which prestresses the locking sleeve (14).

8. The angle piece (1) according to any one of the preceding claims, **characterized in that**
the hollow shaft (8) and/or the locking sleeve (14) and/or the driveshaft (16) and/or the pressure cover (48) of the tool release device (7) is/are shaped essentially symmetrically.

9. The angle piece (1) according to any one of the preceding claims, **characterized in that**
the hollow shaft (8) comprises two parts (8A, 8B), wherein the first and second coupling elements (9, 10) are provided on one of the two parts (8A, 8B).

10. The angle piece (1) according to any one of the preceding claims, **characterized in that**
the inside diameter of the hollow shaft (8) amounts to approximately 1.5-2.5 mm.

11. The angle piece (1) according to any one of the preceding claims, **characterized by** a medical, in particular dental tool (5), for detachable accommodation in the tool receptacle (4) of the angle piece (1), comprising a tool shaft (21) having a working part (21 A) and a coupling section (21 B), wherein the coupling section (21 B) comprises a first polygonal coupling element (22) for transfer of the torque to the tool (5) and a second coupling element (13) having a receptacle (13A), in particular an annular groove running around the tool shaft (21), for a form element (12) of the tool receptacle (4).

12. The angle piece (1) according to Claim 11, **characterized in that** the first and second coupling elements (13, 22) of the medical tool (5) are arranged axially one after the other, based on the longitudinal axis (5A) of the tool (5), in particular being arranged directly one after the other.

13. The angle piece (1) according to Claim 11 or 12, **characterized in that** the first and second coupling elements (13, 22) of the medical tool (5) are arranged directly on the end of the tool (5) opposite the working part (21 A).

## Revendications

1. Pièce angulaire (1) médicale, en particulier dentaire, comprenant une section de poignée (2), une section de tête (3) se raccordant sur la section de poignée (2), une réception d'outil (4) placée dans la section de tête (3) de manière à pouvoir tourner pour recevoir un outil (5) de manière amovible, sachant que l'axe longitudinal (4A) de la réception d'outil (4) et l'axe longitudinal (2A) de la section de poignée (2) sont coudés l'un par rapport à l'autre, de façon à ce qu'un outil (5) reçu dans la réception d'outil (4) fasse saillie d'une ouverture d'outil (6) de la section de tête (3) transversalement à l'axe longitudinal (2A) de la section de poignée (2), et un dispositif de séparation (7) coopérant avec la réception d'outil (4) pour séparer l'outil (5) de la réception d'outil (4), sachant que le dispositif de séparation (7) est disposé sur un côté de la section de tête (3) faisant face à l'ouverture d'outil (6), sachant que la réception d'outil (4) présente un arbre creux (8) qui s'étend depuis l'ouverture d'outil (6) en direction du dispositif de séparation d'outil (7), sachant qu'un premier élément d'accouplement (9) par complémentarité de forme est prévu pour transmettre un moment de rotation à l'outil (5), lequel comprend une section de paroi (9A) polygonale disposée sur le côté intérieur de l'arbre creux (8) et sachant que sur l'extrémité de l'arbre creux (8) qui est plus proche du dispositif de séparation d'outil (7), un deuxième élément d'accouplement (10) par complémentarité de forme pour la fixation axiale de l'outil (5) dans l'arbre creux (8) est prévu, lequel comprend au moins un perçage (11) traversant l'arbre creux (8) et au moins un élément moulé (12) faisant saillie dans l'arbre creux (8) à travers le perçage (11) pour mettre en prise l'élément moulé (12) dans un élément d'accouplement (13) prévu sur l'outil (5), **caractérisée en ce que**
le premier élément d'accouplement (9) par complémentarité de forme est prévu sur l'extrémité de l'arbre creux (8) plus proche du dispositif de séparation d'outil (7) et **en ce qu'**un arbre d'entraînement (16) est prévu qui entoure l'arbre creux (8) et un manchon de verrouillage (14) reçu de manière mobile dans la pièce angulaire (1) avec une réception (15) pour l'élément moulé (12).

2. Pièce angulaire (1) selon la revendication 1, **caractérisée en ce que** le diamètre intérieur de l'arbre creux (8) est sensiblement le même sur toute sa longueur.

3. Pièce angulaire (1) selon la revendication 1 ou 2, **caractérisée en ce que** les premier et deuxième éléments d'accouplement (9, 10), rapportés à l'axe longitudinal (4A) de la réception d'outil (4), sont disposés axialement l'un derrière l'autre, en particulier directement l'un derrière l'autre.

4. Pièce angulaire (1) selon l'une des revendications précédentes, **caractérisée en ce que**
le premier élément d'accouplement (9) avec la section de paroi (9A) polygonale est plus éloigné de l'ouverture d'outil (6) que le deuxième élément d'accouplement (10).

5. Pièce angulaire (1) selon l'une des revendications précédentes, **caractérisée par** un élément ressort (20), qui précontraint le manchon de verrouillage (14) en direction d'un couvercle-poussoir (48) du dispositif de séparation d'outil (7).

6. Pièce angulaire (1) selon l'une des revendications précédentes, **caractérisée par** un épaulement annulaire sur l'arbre d'entraînement (16) qui sert de butée (35) pour limiter le mouvement du manchon de verrouillage (14).

7. Pièce angulaire (1) selon l'une des revendications précédentes, **caractérisée en ce que**
l'arbre d'entraînement (16) présente au moins un point d'appui (17, 37) pour un roulement (18, 38) appuyant l'arbre creux (8) de manière à ce qu'il puisse tourner et / ou un point d'appui (19) pour un élément ressort (20) précontraignant le manchon de verrouillage (14).

8. Pièce angulaire (1) selon l'une des revendications précédentes, **caractérisée en ce que**
l'arbre creux (8) et / ou le manchon de verrouillage (14) et / ou l'arbre d'entraînement (16) et / ou le couvercle-poussoir (48) du dispositif de séparation d'outil (7) est / sont formé(s) sensiblement de manière symétrique.

9. Pièce angulaire (1) selon l'une des revendications précédentes, **caractérisée en ce que**
l'arbre creux (8) comprend deux parties (8A, 8B), sachant que les premier et deuxième éléments d'accouplement (9, 10) sont prévus sur l'une des deux parties (8A, 8B).

10. Pièce angulaire (1) selon l'une des revendications précédentes, **caractérisée en ce que**
le diamètre intérieur de l'arbre creux (8) est d'environ 1,5 - 2,5 mm.

11. Pièce angulaire (1) selon l'une des revendications précédentes, **caractérisée par** un outil (5) médical, en particulier dentaire, destiné à être reçu de manière amovible dans la réception d'outil (4) de la pièce angulaire (1), comprenant une tige d'outil (21) avec une pièce de travail (21A) et une section d'accouplement (21 B), sachant que la section d'accouplement (21 B) comprend un premier élément d'accouplement (22) polygonal pour transmettre un moment de rotation à l'outil (5) et un deuxième élément d'accouplement (13) comprenant une réception (13A), en particulier une gorge annulaire entourant la tige d'outil (21), pour un élément moulé (12) de la réception d'outil (4).

12. Pièce angulaire (1) selon la revendication 11, **caractérisée en ce que** les premier et deuxième éléments d'accouplement (13, 22) de l'outil médical (5), rapportés à l'axe longitudinal (5A) de l'outil (5), sont disposés axialement l'un derrière l'autre, en particulier directement l'un derrière l'autre.

13. Pièce angulaire (1) selon la revendication 11 ou 12, **caractérisée en ce que** les premier et deuxième éléments d'accouplement (13, 22) de l'outil médical (5) sont disposés directement sur l'extrémité de l'outil (5) faisant face à la pièce de travail (21 A).
